# EUROPEAN PATENT APPLICATION

(11) **EP 2 770 403 A1**
(43) Date of publication of application: **27.08.2014**
(21) Application number: 13156645.7
(22) Date of filing: 25.02.2013
(51) Int. Cl.: G06F 3/01, G09G 5/10, G09G 5/26

(54) **Device with glasses mode**

(71) Applicant: BlackBerry Limited, Waterloo, ON N2K 0A7 (CA)
(72) Inventor: Patino, Joseph, Sunrise, FL 33323 (US); Fraser, Randall, Scott, Sunrise, FL 33323 (US)
(74) Representative: MERH-IP Matias Erny Reichl Hoffmann

(57) **Abstract**

A device having a glasses mode, and methods therefor are provided. A display of the device is operated in a glasses mode by controlling the display to a first brightness level when the display is in the glasses mode. The display is operated to exit the glasses mode by controlling the display to a second brightness level when the display exits the glasses mode.

## Description

### FIELD

The specification relates generally to mobile devices, and specifically to a device having a glasses mode, and methods therefor.

### BACKGROUND

The evolution of computers is currently quite active in the mobile device environment. It is now well-known to including calendaring, contacts, and messaging functions in mobile devices. More recently, there has been a veritable explosion of the number and type of applications that are configured to the unique form factors and computing environments of mobile devices.

### SUMMARY

In this specification, elements may be described as "configured to" perform one or more functions or "configured for" such functions. In general, an element that is configured to perform or configured for performing a function comprises structure for performing the function, or is enabled to perform the function, or is suitable for performing the function, or is adapted to perform the function, or is operable to perform the function, or is otherwise capable of performing the function.

In this specification, elements may be described as configured to "capture" an electronic image. In general, an element that is configured to capture an electronic image is configured to acquire an electronic image, or obtain an electronic image, and the like.

In this specification, elements may be described as "rendering" an electronic image and/or configured to "render" an electronic image. In general, an element that is configured to render an electronic image is configured to process electronic image data, for example from an electronic image file and/or data received from a camera device, and control pixels and/or elements of an electronic display device to display the electronic image, or provide the electronic image and the like.

In this specification, elements may be described as being operated in a glasses mode. However, the term "glasses mode" is not to be limited merely to a mode related to eyeglasses comprising a frame and plastic and/or glass lenses. Rather the term glasses mode can be related to any type of corrective lenses including, but not limited to, eyeglasses, contact lenses, monocles, bifocal lenses, trifocal lenses, progressive lenses, adjustable focus lenses, aspheric lenses, plano lenses and the like.

An aspect of the specification provides a device comprising: a processor, a memory, and a display, the processor configured to: operate the display in a glasses mode by controlling the display to a first brightness level when the display is in the glasses mode; and, operate the display to exit the glasses mode by controlling the display to a second brightness level when the display exits the glasses mode.

The first brightness level can be less than the second brightness level.

The device can further comprise a camera device configured to capture an electronic image of a user of the device, wherein the processor can be further configured to one or more of: automatically operate the display in the glasses mode in response to: analyzing the electronic image; and, determining that the electronic image comprises an image of the user wearing glasses; and automatically operate the display to exit the glasses mode in response to: analyzing the electronic image; and, determining that the electronic image comprises an image of the user without glasses.

The device can further comprise an input device, wherein the processor can be further configured to one or more of: operate the display in the glasses mode when first input data is received at the input device indicating that the display is to be operated in the glasses mode; and operate the display to exit the glasses mode when second input data is received at the input device indicating that the display is to exit the glasses mode.

The processor can be further configured to: operate the display in the glasses mode by controlling the display to the first brightness level and controlling a font size of text at the display to a first font size, when the display is in the glasses mode; and, operate the display to exit the glasses mode by controlling the display to the second brightness level and controlling the font size of the text at the display to a second font size, when the display exits the glasses mode. The second font size can be greater than the first font size, and the first brightness level can be less than or equal to the second brightness level.

The processor can be further configured to enter a glasses learning mode and, in the glasses learning mode: receive first input indicative of the first brightness level; receive first additional input indicative of the first font size; receive second input indicative of the second brightness level; receive second additional input indicative of the second font size; and store the first input, the first additional input, the second input and the second additional input at the memory.

The processor can be further configured to enter a glasses learning mode and, in the glasses learning mode: receive first input indicative of the first brightness level; receive second input indicative of the second brightness level; and store the first input and the second input at the memory.

The device can further comprise a sensor for detecting an ambient brightness level, and wherein the first brightness level and the second brightness level are dependent on the ambient brightness level. The memory can store data indicative of the first brightness level and the second brightness level at each of two or more ambient brightness levels.

Another aspect of the specification provides a method comprising: operating, using a processor of a device, a display of the device in a glasses mode by controlling the display to a first brightness level when the display is in the glasses mode; and, operating, using a processor, the display to exit the glasses mode by controlling the display to a second brightness level when the display exits the glasses mode.

The first brightness level can be less than the second brightness level.

The method can further comprise: automatically operating the display in the glasses mode in response to: analyzing an electronic image captured by a camera of the device; and, determining that the electronic image comprises an image of a user of the device wearing glasses; and automatically operating the display to exit the glasses mode in response to: analyzing the electronic image; and, determining that the electronic image comprises an image of the user without glasses.

The method can further comprise: operating the display in the glasses mode when first input data is received at an input device of the device indicating that the display is to be operated in the glasses mode; and operating the display to exit the glasses mode when second input data is received at the input device indicating that the display is to exit the glasses mode.

The method can further comprise: operating the display in the glasses mode by controlling the display to the first brightness level and controlling a font size of text at the display to a first font size, when the display is in the glasses mode; and, operating the display to exit the glasses mode by controlling the display to the second brightness level and controlling the font size of the text at the display to a second font size, when the display exits the glasses mode. The second font size can be greater than the first font size, and the first brightness level can be less than or equal to the second brightness level.

The method can further comprise the device entering a glasses learning mode and, in the glasses learning mode: receiving first input indicative of the first brightness level; receiving first additional input indicative of the first font size; receive second input indicative of the second brightness level; receiving second additional input indicative of the second font size; and storing the first input, the first additional input, the second input and the second additional input at the memory.

The method can further comprise the device entering a glasses learning mode and, in the glasses learning mode: receiving first input indicative of the first brightness level; receiving second input indicative of the second brightness level; and storing the first input and the second input at the memory.

The device can comprise a sensor for detecting an ambient brightness level, and wherein the first brightness level and the second brightness level can be dependent on the ambient brightness level. A memory of the device can stores data indicative of the first brightness level and the second brightness level at each of two or more ambient brightness levels.

Yet a further aspect of the specification provides a computer program product, comprising a computer usable medium having a computer readable program code adapted to be executed to implement a method comprising: operating, using a processor of a device, a display of the device in a glasses mode by controlling the display to a first brightness level when the display is in the glasses mode; and, operating, using a processor, the display to exit the glasses mode by controlling the display to a second brightness level when the display exits the glasses mode. The computer usable medium can comprise a non-transitory computer usable medium.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a schematic diagram of a device configured to operate in a glasses mode, according to non-limiting implementations.

Fig. 2 depicts a front perspective view of the device of Fig. 1 and a user viewing the device, according to non-limiting implementations.

Fig. 3 depicts a flowchart of a method for operating a device in a glasses mode, according to non-limiting implementations.

Fig. 4 depicts a Graphic User Interface (GUI) for manually switching the device of Fig. 1 into a glasses mode, according to non-limiting implementations.

Fig. 5 depicts a GUI for manually exiting the glasses mode at the device of Fig. 1, according to non-limiting implementations.

Fig. 6 depicts a GUI illustrating automatic switching of the device of Fig. 1 into a glasses mode, according to non-limiting implementations.

Fig. 7 depicts a GUI illustrating automatic switching of the device of Fig. 1 out of a glasses mode, according to non-limiting implementations.

Fig. 8 depicts a GUI of a glasses learning mode at the device of Fig. 1 for setting brightness and font size of a display in dim ambient light in the glasses mode, according to non-limiting implementations.

Fig. 9 depicts a GUI of a glasses learning mode at the device of Fig. 1 for setting brightness and font size of a display in dim ambient light when exiting the glasses mode, according to non-limiting implementations.

Fig. 10 depicts a GUI of a glasses learning mode at the device of Fig. 1 for setting brightness and font size of a display in bright ambient light in the glasses mode, according to non-limiting implementations.

Fig. 11 depicts a GUI of a glasses learning mode at the device of Fig. 1 for setting brightness and font size of a display in bright ambient light when exiting the glasses mode, according to non-limiting implementations.

### DETAILED DESCRIPTION

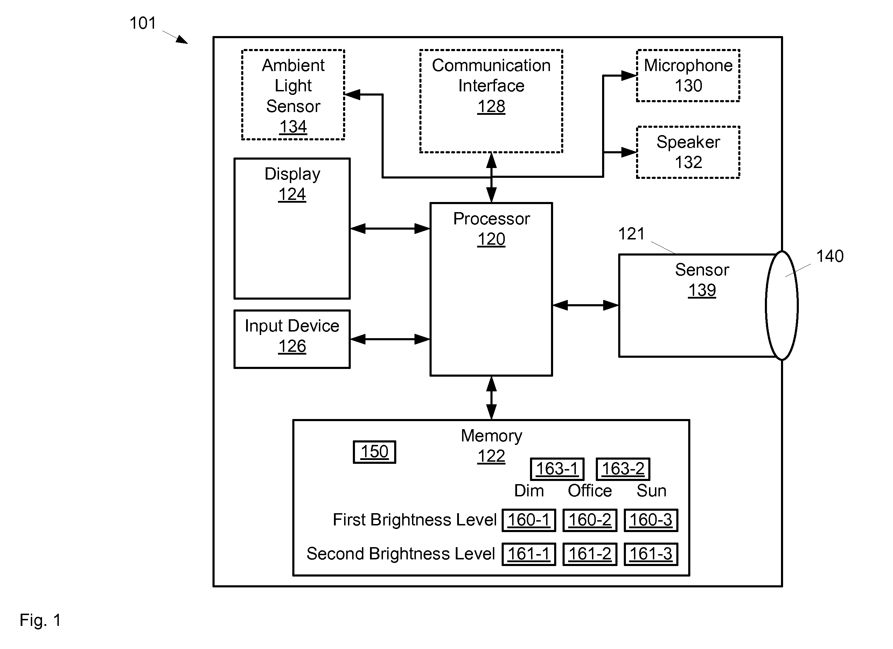

Fig. 1 depicts a device 101 configured to operate in a glasses mode, according to non-limiting implementations. Device 101 comprises: a processor 120 interconnected with an optional camera device 121, a memory 122, a display 124, an input device 126, and an optional communication interface 128, an optional microphone 130, an optional speaker 132, and an optional ambient light sensor 134. Camera device 121, when present, comprises a sensor 139 for capturing at least one electronic image and a lens system 140 for focusing light onto sensor 139, the focused light sensed by sensor 139 for capturing electronic images. In general, display 124 is configured to operate at different brightness levels. Further, as will presently be described, processor 120 is configured to: operate display 124 in a glasses mode by controlling display 124 to a first brightness level when display 124 is in the glasses mode; and, operate display 124 to exit the glasses mode by controlling display 124 to a second brightness level when display 124 exits the glasses mode.

For example, an eye's accommodation response when viewing display 124 (e.g. to read text rendered at display 124) can change depending on whether a user of device 101 is wearing glasses or not wearing glasses. Specifically, accommodation is the process by which an eye changes optical power to maintain a clear image and/or focus on an object as distance varies. A user will experience differences in accommodation when wearing glasses (and/or corrective lenses) and when not wearing glasses (and/or corrective lenses). In particular, a contrast of display 124 should generally be at a higher contrast when a user is not wearing glasses, as compared to when a user is wearing glasses and/or corrective lenses. This can be especially true for older users, for example users who are greater than about 40 to 50 years old, when a human being's near sight capability tends to deteriorate. Hence, when a user is wearing glasses, display 124 can generally be operated at a lower brightness level as compared to when the user is not wearing glasses (and/or corrective lenses), thus reducing the contrast of display 124. Hence, power saving at device 101 can be achieved by switching display 124 to a glasses mode where the first brightness level of display in the glasses mode is less than a second brightness level of display 124 when display 124 is not operating in the glasses mode; in other words, the brightness level of display 124 is controlled such that the contrast of display 124 is higher when not in a glasses mode, than when in a glasses mode, as will be described hereafter.

Device 101 can be any type of electronic device that can be used in a self-contained manner to render data at display 124 and operate display 124 in a glasses mode. Device 101 includes, but is not limited to, any combination of digital cameras, electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-configured appliances and the like.

It is appreciated that Fig. 1 further depicts a schematic diagram of device 101 according to non-limiting implementations. It should be emphasized that the structure of device 101 1 in Fig. 1 is purely an example, and contemplates a device that can be used for wireless voice (e.g. telephony) and wireless data communications (e.g. email, web browsing, text, and the like). However, while Fig. 1 contemplates a device that can be used for telephony, in other implementations, device 101 can comprise a device configured for implementing any suitable specialized functions, including but not limited to one or more of camera functionality, telephony, computing, appliance, and/or entertainment related functions.

Device 101 comprises at least one input device 126 generally configured to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Input from input device 126 is received at processor 120 (which can be implemented as a plurality of processors, including but not limited to one or more central processors (CPUs)). Processor 120 is configured to communicate with memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art recognize that memory 122 is an example of computer readable media that can store programming instructions executable on processor 120. Furthermore, memory 122 is also an example of a memory unit and/or memory module.

In particular, it is appreciated that memory 122 stores at least one application 150, that, when processed by processor 120, enables processor 120 to: operate display 124 in a glasses mode by controlling display 124 to a first brightness level when display 124 is in the glasses mode; and, operate display 124 to exit the glasses mode by controlling display 124 to a second brightness level when display 124 exits the glasses mode. It is yet further appreciated that at least one application 150 is an example of programming instructions stored at memory 122.

Memory 122 further stores data indicative of the first brightness level and the second brightness level at three different ambient light levels. For example first brightness level data 160-1, 160-2, 160-3 and second brightness level data 161-1, 161-2, 161-3 is stored for three different ambient light levels, the ambient light level determined via ambient light sensor 134, as described below. First brightness level data 160-1, 160-2, 160-3 will interchangeably referred to hereafter, collectively, as first brightness level data 160 and generically as a first brightness level data 160; similarly, second brightness level data 161-1, 161-2, 161-3 will interchangeably referred to hereafter, collectively, as second brightness level data 161 and generically as a second brightness level data 161. It is further appreciated that each first brightness level data 160 is stored in association with a corresponding second brightness level data 161, and each pair of brightness level data 160, 161 are indicative of a brightness level to which display 124 is to be controlled at a given ambient lighting level.

For example, memory 122 further stores one or more threshold ambient light levels 163-1, 163-2 to determine which pair of first brightness level data 160 and second brightness level data 161 to use to control display 124. Threshold ambient light levels 163-1, 163-2 will also be interchangeably referred to hereafter, as threshold ambient lighting levels 163, and generically as a threshold ambient lighting level 163. As depicted, memory stores two threshold ambient lighting levels 163, threshold ambient lighting level 163-1 being less than threshold ambient lighting level 163-2. Hence, for example, when an ambient light level is less than threshold ambient lighting level 163-1, processor 120 can: control display 124 to first brightness level data 160-1 when display 124 is to be operated in the glasses mode; and control display 124 to second brightness level data 161-1 when display 124 is to be operated to exit the glasses mode. Similarly, when an ambient light level is between threshold ambient lighting levels 163-1, 163-2 processor 120 can: control display 124 to first brightness level data 160-2 when display 124 is to be operated in the glasses mode; and control display 124 to second brightness level data 161-2 when display 124 is to be operated to exit the glasses mode. And further when an ambient light level is greater than threshold ambient lighting level 163-2, processor 120 can: control display 124 to first brightness level data 160-3 when display 124 is to be operated in the glasses mode; and control display 124 to second brightness level data 161-3 when display 124 is to be operated to exit the glasses mode.

It is further appreciated that, in Fig. 1, brightness level data 160, 161 are arranged in a table with rows labeled "First Brightness Level" and "Second Brightness Level" and columns labeled "Dim", "Office", "Sun". However, the labels and table structure of brightness level data 160, 161 are merely provided for clarity, and it is appreciated that the labels and table structure are optional.

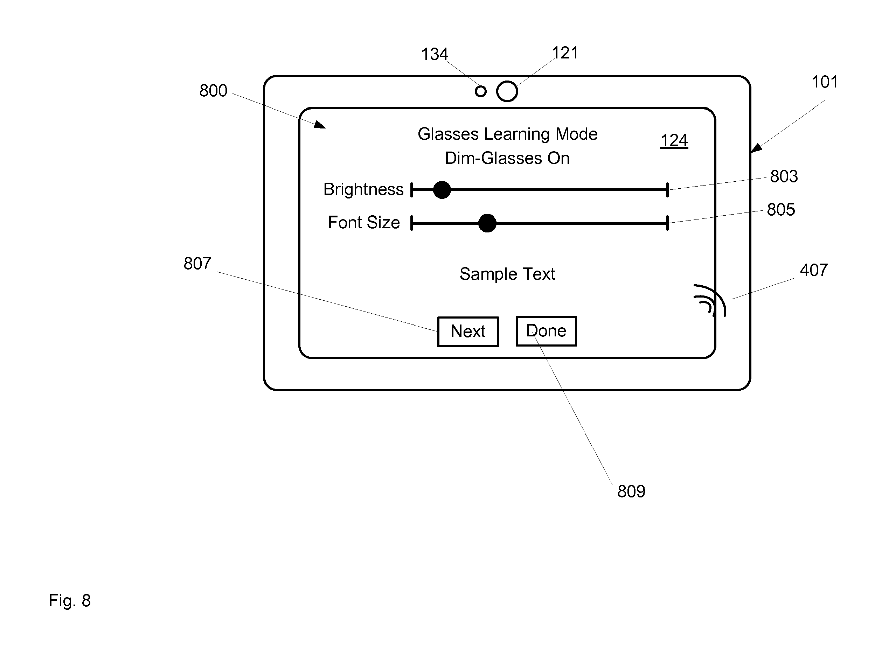

Further, brightness level data 160, 161 can be any values, and further can be configurable at device 101, for example via input device 126 and the like, as described below with reference to Figs. 8 to 11.

It is further appreciated that ambient brightness levels below threshold ambient brightness level 163-1 are referred to as "Dim" ambient brightness levels, and is meant to refer to ambient brightness levels that can occur at night and/or in low lighting environments, for example less than about 80 lux; hence, threshold ambient brightness 163-1 can be associated with about 80 lux, however threshold ambient brightness 163-1 can be in any suitable units compatible with ambient light sensor 134 and/or unitless (e.g. when ambient light sensor 134 merely provides a value on an arbitrary relative scale, such as 0 to 255).

Similarly, It is further appreciated that ambient brightness levels above threshold ambient brightness 163-2 are categorized under a "Sun" ambient lighting level, indicating ambient brightness levels that can occur in the daytime and/or in high lighting environments, for example greater than about 32000 lux; hence, threshold ambient brightness 163-2 can be associated with about 32000 lux, however threshold ambient brightness 163-2 can be in any suitable units compatible with ambient light sensor 134 and/or unitless (e.g. when ambient light sensor 134 merely provides a value on an arbitrary relative scale, such as 0 to 255).

Ambient brightness levels between threshold ambient brightnesses 163-1, 163-2 are referred to as "Office", indicating ambient brightness levels that can occur indoors and/or under artificial light, for example between about 80 lux and about 32000 lux.

However, the terms "Dim", "Office" and "Sun" are appreciated to be merely labels. Further, threshold ambient brightness levels 163 can be any values. For example, "Office" threshold ambient brightness levels 163 can from about 320 lux to about 500 lux, and "Sun" threshold ambient brightness levels 163 can be from about 10,000 lux to 130,000 lux. Threshold ambient brightness levels 163 can be configurable at device 101, for example via input device 126 and/or pull down menus and the like.

Further, while three sets of brightness level data 160, 161 are depicted in Fig. 1, one for each range of ambient brightness levels represented by threshold ambient brightness levels 163, present implementations are not so limiting. For example, in some implementations, only one first brightness level data 160 and one corresponding second brightness level data 161 can be stored at memory 122, and no threshold ambient brightness levels are stored; in these implementations, ambient light sensor 134 is optional and/or not present. However any number of sets of brightness level data 160, 161 are within the scope of present implementations; for example, in other implementations, two sets of brightness level data 160, 161 can be stored, one each for a "Dim" ambient brightness level and a "Sun" ambient brightness level, along with one threshold ambient brightness level below which ambient light is considered to be "Dim", and above which ambient light is considered to be "Sun" and/or sunny. Indeed, one or more of each of first brightness level data 160 and second brightness level data 161 can be stored, with an appropriate number of threshold ambient brightness levels 163.

In other words, in these implementations memory 122 stores data 160, 161 indicative of the first brightness level and the second brightness level at each of two or more ambient brightness levels.

However, in yet further implementations, it is appreciated that the brightness of display 124 can be adjusted continuously based on measured brightness at ambient light sensor 134. For example, when display 124 is in a glasses mode or not in a glasses mode, display 124 can be adjusted by receiving a value associated with brightness from ambient light sensor 134 and adjusting brightness of display 124 based on whether display 124 is in a glasses mode or not in a glasses mode, as described above. However, in these implementations, when display 124 is in a glasses mode, display 124 can be adjusted continuously between "Dim" first brightness level 160-1 and "Sun" first brightness level 160-3 based on the measured ambient brightness; in other words, the brightness of display 124 does not "step" from "Dim" first brightness level 160-1 to "Office" first brightness level 160-2 to "Sun" first brightness level 160-3 as ambient brightness level increases, but rather smoothly (e.g. linearly, exponentially, logarithmically, and/or any other suitable function and the like) increases as ambient brightness level increases. Similarly, when ambient brightness level decreases, brightness of display 124 smoothly decreases.

Accordingly, when display 124 is not in a glasses mode, display 124 can be adjusted continuously between "Dim" second brightness level 160-2 and "Sun" second brightness level 160-2 based on the measured ambient brightness, such that display 124 smoothly increases in brightness as ambient brightness increases and smoothly decreases in brightness as ambient brightness decreases.

Sensor 139 of camera device 121 generally comprises any device for acquiring electronic images, including but not limited one or more of an electronic camera, an electronic video camera, a CMOS (complementary metal-oxide-semiconductor) image sensor, a CCD (charge-coupled device) image sensor and the like. In yet further implementations, camera device 121 comprises a sensor module and/or a camera module comprising sensor 139 and lens system 140.

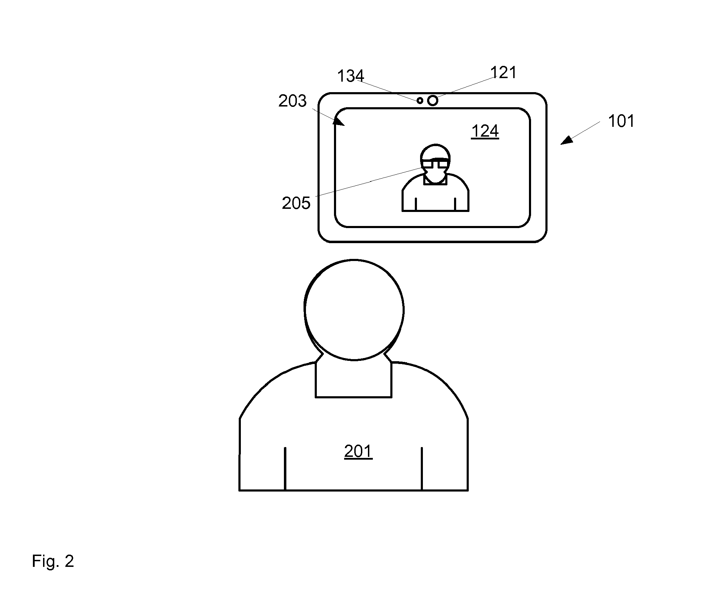

Camera device 121, when present, is configured to capture at least one electronic image of a user of device 101 1 to determine whether the user is wearing glasses or not. For example, as best understood from Fig. 2, described below, in present implementations, camera device 121 is further configured to capture electronic images from a field of view facing towards a front of device 101 such that at least one electronic image of a user facing device 101 can be captured. However, in some implementations, device 101 can comprise more than one camera device 121 and/or more than one sensor similar to sensor 139 and/or more than one lens system similar to lens system 140, for acquiring images at more than one field of view, for example a field of view facing away from a rear of camera device 121. Further, images captured by camera device 121 can comprise one or more of camera images, video images, video streams and the like.

It is yet further appreciated that, in some implementations, camera device 121 can comprise an infrared sensor such that images comprise electronic infrared images and hence camera device 121 can function in low ambient lighting scenarios.

In addition to one or more lenses, lens system 140 can optionally comprise a mechanical focussing mechanism for changing the focal plane of camera device 121, including, but not limited to, any combination of voice coil actuators, piezoelectric motors, stepper motors, and the like.

Processor 120 can also be configured to communicate with display 124, and optionally microphone 130 and a speaker 132. Display 124 comprises any suitable one of or combination of CRT (cathode ray tube) and/or flat panel displays (e.g. LCD (liquid crystal display), plasma, OLED (organic light emitting diode), capacitive or resistive touch screens, and the like). When display 124 comprises a touch screen, it is appreciated that display 124 and input device 126 can be combined into one apparatus.

Further, a brightness level of display 124 can be controlled by processor 120. For example, when display 124 comprises a CRT, a brightness level of the CRT can be controlled by adjusting an intensity of an electron beam scanning phosphors of the CRT. Similarly, when display 124 comprises an LCD, a brightness level of the LCD can be controlled by adjusting a brightness of a backlight of the LCD; for example the backlight can comprise light emitting diodes (LEDs), cold cathode fluorescent lamps (CCFLs), and the like, and the brightness of the LEDs, the CCFLs, and the like can be adjusted. When display 124 comprises an OLED display or a plasma display, a brightness level of the display can be controlled by adjusting current through pixels of the display. Indeed, it is appreciated that any suitable adjustment of display brightness that is accompanied by power savings when display 124 is dimmed is within the scope of present implementations. Furthermore, when the present specification refers to adjusting and/or controlling display brightness, the appropriate mechanism for controlling display brightness is controlled by processor 120 to increase or decrease display brightness.

While optional, microphone 130 is configured to receive sound data, and speaker 132 is configured to provide sound data, audible alerts, audible communications, and the like, at device 101. In some implementations, input device 126 and display 124 are external to device 101, with processor 120 in communication with each of input device 126 and display 124 via a suitable connection and/or link.

In optional implementations, as depicted, processor 120 also connects to communication interface 128, which is implemented as one or more radios and/or connectors and/or network adaptors, configured to wirelessly communicate with one or more communication networks (not depicted). It will be appreciated that, in these implementations, communication interface 128 can be configured to correspond with network architecture that is used to implement one or more communication links to the one or more communication networks, including but not limited to any suitable combination of USB (universal serial bus) cables, serial cables, wireless links, cell-phone links, cellular network links (including but not limited to 2G, 2.5G, 3G, 4G+, UMTS (Universal Mobile Telecommunications System), CDMA (Code division multiple access), WCDMA (Wideband CDMA), FDD (frequency division duplexing), TDD (time division duplexing), TDD-LTE (TDD-Long Term Evolution), TD-SCDMA (Time Division Synchronous Code Division Multiple Access) and the like, wireless data, Bluetooth links, NFC (near field communication) links, WiFi links, WiMax links, packet based links, the Internet, analog networks, the PSTN (public switched telephone network), access points, and the like, and/or a combination. When communication interface 128 is configured to communicate with one or more communication networks, communication interface 128 can comprise further protocol specific antennas there for (not depicted).

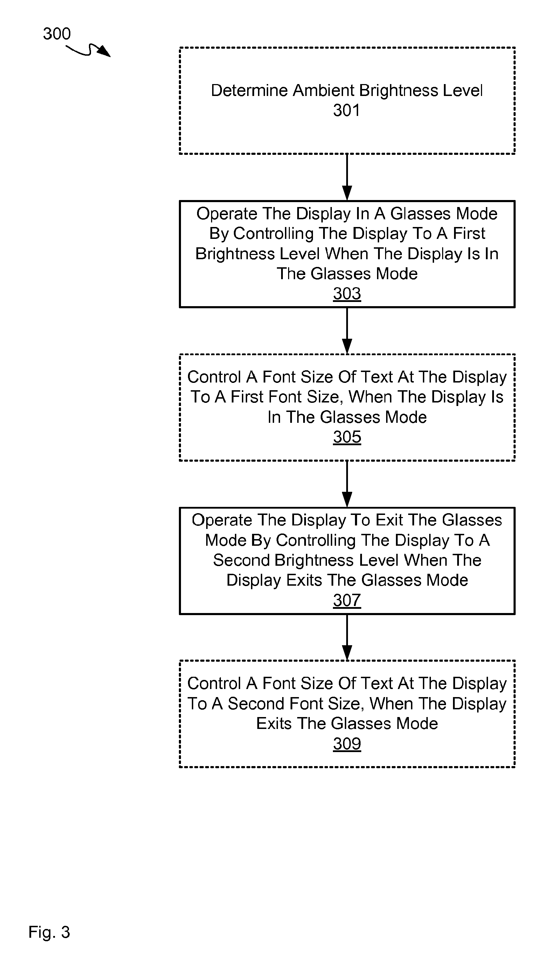

Optional ambient light sensor 134 can comprise any sensor for sensing ambient light around device 101, for example proximal display 124, as described below with reference to Fig. 3. For example, ambient light sensor 134 can comprise a photosensor, a photodetector, and the like which is configured at device 101 to receive ambient light, for example via an aperture and/or window in a housing of device 101.

While not depicted, it is further appreciated that device 101 further comprises one or more power sources, including but not limited to a battery and/or a connection to an external power source, including, but not limited to, a main power supply.

In any event, it should be understood that in general a wide variety of configurations for device 101 are contemplated.

Fig. 2 depicts a front perspective view of device 101, according to non-limiting implementations, and further a rear of a user 201 viewing front of device 101. From Fig. 2, it is apparent that camera device 121 is configured to capture electronic images 203 of a field of view facing a front of device 101, and that ambient light sensor 134 is configured to detect ambient light adjacent display 124 and/or at a front of device 101. It is further appreciated that only external portions of camera device 121 and ambient light sensor 134 are depicted in Fig. 3, for example, respectively, one or more lenses of lens system 140, and a window and/or aperture in a housing through which ambient light sensor 134 detects ambient light.

It is further apparent that, in Fig. 2, display 124 is rendering an electronic image of user 201 captured by camera device 121. It is further apparent from electronic image 203 that user 201 is wearing glasses 205 (though glasses 205 are not visible on user 201 as user 201 is only a rear of user 201 is visible).

However, electronic image 203 need not be rendered at display 124, and electronic image 203 of user 201 is depicted merely to illustrate that camera device 121 is configured to capture electronic images 203 of a field a view facing a front of device 101,and specifically a front of user 201.

It is further appreciated that Fig. 2 is not to scale and that device 101 1 is generally much smaller than user 201.

Attention is now directed to Fig. 3 which depicts a flowchart illustrating a method 300 for implementing a glasses mode at a device, according to non-limiting implementations. In order to assist in the explanation of method 300, it will be assumed that method 300 is performed using device 101. Furthermore, the following discussion of method 300 will lead to a further understanding of device 101 and its various components. However, it is to be understood that device 101 and/or method 300 can be varied, and need not work exactly as discussed herein in conjunction with each other, and that such variations are within the scope of present implementations. It is appreciated that, in some implementations, method 300 is implemented in device 101 by processor 120.

It is to be emphasized, however, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood that method 300 can be implemented on variations of device 101 as well.

At an optional block 301, processor 120 determines ambient brightness via ambient light sensor 134. Block 301 is generally performed when ambient light sensor 134 is present and when at least one threshold ambient lighting level 163 is stored at memory 122.

At block 303, processor 120 operates display 124 in a glasses mode by controlling display 124 to a first brightness level when display 124 is in the glasses mode, first brightness level being stored at first brightness level data 160. First brightness level can be dependent on the ambient brightness level determined at block 301: in other words, any of first brightness level data 160 can be used to control display 124 to the first brightness level, depending on the ambient brightness level. For example, when the ambient brightness level is less than threshold ambient brightness level 163-1, first brightness level data 160-1 can be used to control display 124; when the ambient brightness level is greater than threshold ambient brightness level 163-2, first brightness level data 160-3 can be used to control display 124; and when the ambient brightness level is between threshold ambient brightness levels 163-1, 163-2, first brightness level data 160-2 can be used to control display 124

At optional block 305, processor 120 controls a font size of text at display 124 to a first font size, when display 124 is in the glasses mode. It is apparent that block 303, and block 305, when performed, can be performed in any order and/or in parallel with each other. Further, while not depicted, the first font size can be stored at memory 122, similar to first brightness level data 160; indeed, a first font size for each brightness level "Dim", "Office", and "Sun" can be stored.

At block 307, processor operates display 124 to exit the glasses mode by controlling display 124 to a second brightness level when display 124 exits the glasses mode, second brightness level being stored at second brightness level data 161. Second brightness level can be dependent on the ambient brightness level determined at block 301: in other words, any of second brightness level data 161 can be used to control display 124 to the second brightness level, depending on the ambient brightness level. For example, when the ambient brightness level is less than threshold ambient brightness level 163-1, second brightness level data 161-1 can be used to control display 124; when the ambient brightness level is greater than threshold ambient brightness level 163-2, second brightness level data 161-3 can be used to control display 124; and when the ambient brightness level is between threshold ambient brightness levels 163-1, 163-2, second brightness level data 161-2 can be used to control display 124

At optional block 309, processor 120 controls a font size of text at display 124 to a second font size, when display 124 exits the glasses mode. Further, while not depicted, the second font size can be stored at memory 122, similar to second ambient brightness level data 161; indeed, a second font size for each brightness level "Dim", "Office", and "Sun" can be stored.

It is apparent that block 307, and block 309, when performed, can be performed in any order and/or in parallel with each other.

In method 300, the first brightness level is generally appreciated to be less than the second brightness level. In other words, in the glasses mode, the contrast of display 124 can be less than the contrast of display 124 when the glasses mode is exited.

Further, when blocks 305, 309 are performed, the second font size is generally appreciated to be greater than the first font size, thereby making text easier to read without glasses when display 124 is not in the glasses mode, which also reduces contrast requirements when display 124 is not in the glasses mode, as larger text is generally easier to read and hence contrast need not be as high as when text is smaller. Hence, in these implementations, the first brightness level can be less than or equal to the second brightness level. In other words, when text size is increased when display 124 exits the glasses mode, the brightness of display 124 need not be increased, which again reduces power consumption at device 101, as compared to when text size is not adjusted, and display brightness is increased when display 124 exits the glasses mode.

In any event, it is apparent that block 303, 307 can be performed in any order. For example when display 124 is already in the glasses mode, block 307 can be performed prior to block 303. When display 124 is not in the glasses mode, block 303 can be performed prior to block 307.

Similarly, when blocks 305, 309 are performed, blocks 305, 309 can also be performed in any order. For example when display 124 is already in the glasses mode, block 309 can be performed prior to block 305. When display 124 is not in the glasses mode, block 305 can be performed prior to block 309. However, it is further apparent that block 305 is generally performed in conjunction with block 303 and block 309 is generally performed in conjunction with block 307.

It is also appreciated that block 301, when implemented, can be performed in parallel with and/or before and/or after any of blocks 303, 305, 307, 309; indeed, block 301 can be repeated in method 300 to determine ambient light in conjunction with any of blocks 303, 305, 307, 309. Hence, when ambient lighting level changes, method 300 can be implemented in a feedback loop and/or each of blocks 303, 305, 307, 309 can be implemented based on an ambient light level determined using ambient lighting sensor 134 when each of blocks 303, 305, 307, 309 are implemented.

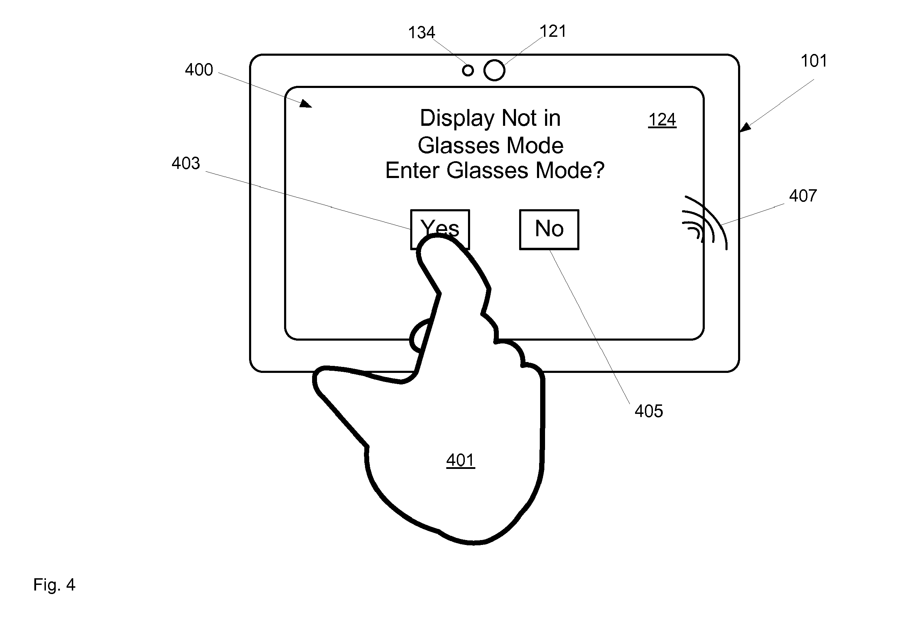

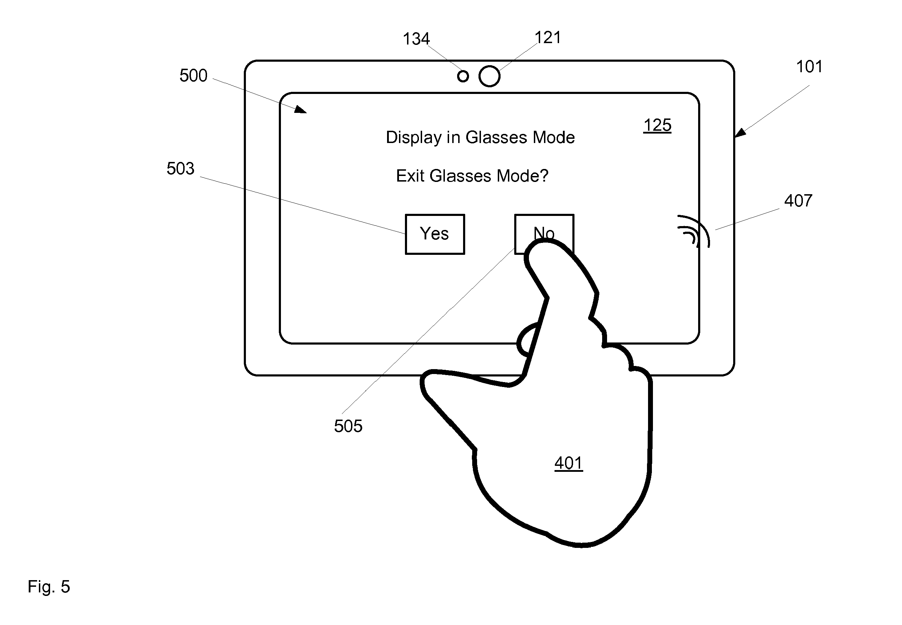

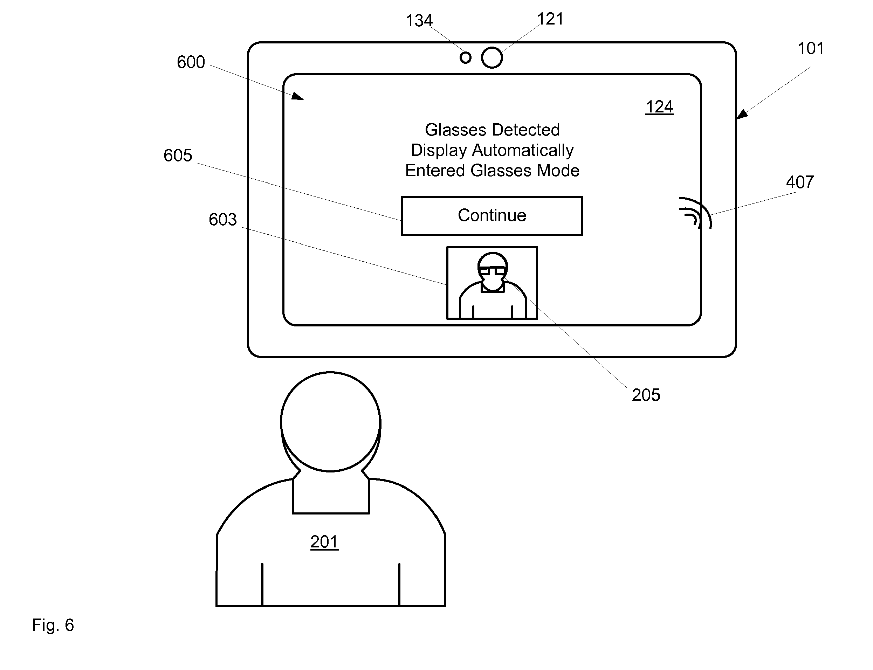

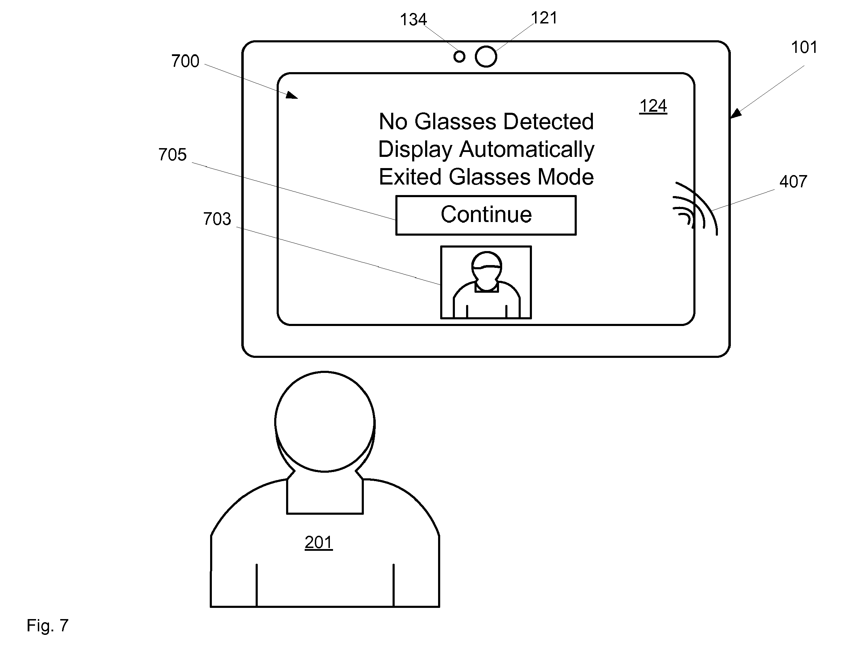

Non-limiting examples of method 300 will now be described with reference to Figs. 4 to 7, each of which are substantially similar to Fig. 3 with like elements having like numbers. In particular, it is appreciated that Figs. 4 and 5 are indicative of a manual mode of method 300 and Figs. 6 and 7 are indicative of an automatic mode of method 300. It is yet further appreciated that, in Figs. 4 to 7, it is assumed that display 124 comprises a touchscreen and hence input device 126 and display 124 are combined; hence, input data can be received at display 124. However, in other implementations, input device 126 can be separate from display 124 and input data can be received at input devices that do not include display 124.

Attention is next directed to Fig. 4, where it is assumed that display 124 is presently not in a glasses mode. It is further appreciated that user 201 has manually selected a Graphic User Interface (GUI) 400 for entering the glasses mode, for example from a pulldown menu (not depicted) and the like. GUI 400 comprises a text which indicates that display 124 is not presently in the glasses mode ("Display Not in Glasses Mode") and further text querying whether the glasses mode is to be entered ("Enter Glasses Mode?"). A finger of a hand 401 of user 201 can be used to select one of two virtual buttons 403, 405, or the like. When virtual button 405 ("No") is selected, GUI 400 can be exited. However, as depicted, when virtual button 403 ("Yes") is selected, at least block 303 of method 300 is implemented, and optionally blocks 301, 305. In other words, processor 120 operates display 124 in the glasses mode when first input data is received at input device 126 (e.g. touch screen input data received upon actuation of virtual button 403) indicating that display 124 is to be operated in the glasses mode. In depicted implementations brightness 407 is reduced, and font size is reduced.

For example, Fig. 4 can be compared to Fig. 5, which depicts a GUI 500 similar to GUI 400. However, in Fig. 5, display 124 has been placed in glasses mode, and brightness 407 of display 124 is reduced, as compared to Fig. 4. Further, font size of text in Fig. 5 is smaller than font size of text in Fig. 4. GUI 500 can generally be used to exit the glasses mode.

While in depicted implementations, GUI 500 is provided when virtual button 403 is selected from GUI 500, in other implementations, GUI 500 can be manually selected, for example from a pulldown menu (not depicted) and the like, similar to GUI 400. GUI 500 comprises a text which indicates that display 125 is presently in the glasses mode ("Display in Glasses Mode") and further text querying whether the glasses mode is to be exited ("Exit Glasses Mode?"). A finger of a hand 401 of user 201 can be used to select one of two virtual buttons 503, 505, or the like. When virtual button 505 ("No") is selected, GUI 500 can be exited. However, as depicted, when virtual button 503 ("Yes") is selected, at least block 307 of method 300 is implemented, and optionally blocks 301, 309. In other words, processor 120 operate display 124 to exit the glasses mode when second input data is received at input device 126 (e.g. touch screen input data received upon actuation of virtual button 503) indicating that display 124 is to exit the glasses mode. In depicted implementations brightness 507 is increased, and font size is increased, similar to GUI 400.

GUIs 400 and 500 are not to be considered unduly limiting and other GUIs for manually entering and exiting the glasses mode are within the scope of present implementations. For example, virtual buttons 403, 405, 503, 505 can be optional, and gesture based inputs can be received to indicate similar actions. Further, text provided at each GUI can be configured to convey similar information, but in a different manner.

Attention is next directed to Fig. 6, which depicts a rear view of user 201 viewing a front of device 101, and a GUI 600 that can be provided when display 124 automatically enters the glasses mode. It is further appreciated that, like Fig. 2, Fig. 6 is not to scale and that device 101 is generally smaller than user 201. GUI 600 is further appreciated to be optional and is depicted only to illustrate an automatic mode of method 300. Indeed, in other implementations, GUI 600 is not provided and method 300 is implemented in the background; in these implementations, an icon, or the like, can be provided in a status bar, or the like, to indicate that display 124 has entered a glasses mode.

In any event, in Fig. 6, at least block 303 has been automatically implemented; specifically, in Fig. 6, processor 120: automatically operates display 124 in the glasses mode in response to: analyzing an electronic image 603 of user 201 captured by camera device 121; and, determining that electronic image 603 comprises an image of user 201 wearing glasses 205, as in Fig. 2. It is yet further appreciated that electronic image 603 is optional and is depicted only to illustrate that processor 120 has detected that user 201 is wearing glasses 205.

GUI 600 further comprises text indicating that display 124 has automatically entered the glasses mode ("Glasses Detected Display Automatically Entered Glasses Mode") and a virtual button 605 for exiting GUI 600.

It is yet further appreciated that, in Fig. 6, brightness 407 of display 124, and text size, is similar to that of Fig. 5. In other words, as depicted, both blocks 303 and 305 have been implemented. Further block 301 can be implemented to determine which first brightness level data 160 (and optionally font size) is to be used to control brightness 407 of display 124.

Hence, when user 201 is wearing glasses 205 and/or when user 201 puts on glasses 205, device 101 can automatically detect that user 201 is wearing glasses and automatically control display 124 to enter the glasses mode.

Attention is next directed to Fig. 7, which depicts a rear view of user 201 viewing a front of device 101, and a GUI 700 that can be provided when display 124 automatically exits the glasses mode. It is further appreciated that, like Fig. 2, Fig. 7 is not to scale and that device 101 is generally smaller than user 201. GUI 700 is further appreciated to be optional and is depicted only to illustrate an automatic mode of method 300. Indeed, in other implementations, GUI 700 is not provided and method 300 is implemented in the background; in these implementations, an icon, or the like, can be provided in a status bar, or the like, to indicate that display 124 has exited a glasses mode.

In any event, in Fig. 7, at least block 307 has been automatically implemented; specifically, in Fig. 7, processor 120: automatically operates display 124 to exit the glasses mode in response to: analyzing an electronic image 703 of user 201 captured by camera device; and, determining that electronic image 703 comprises an image of user 201 without glasses. It is yet further appreciated that electronic image 703 is optional and is depicted only to illustrate that processor 120 has detected that user 201 is not wearing glasses 205.

GUI 700 further comprises text indicating that display 124 has automatically exited the glasses mode ("No Glasses Detected Display Automatically Exited Glasses Mode") and a virtual button 705 for exiting GUI 700.

It is yet further appreciated that, in Fig. 7, brightness 407 of display 124, and text size, is similar to that of Fig. 4. In other words, as depicted, both blocks 307 and 309 have been implemented. Further block 301 can be implemented to determine which second brightness level data 161 is to be used to control brightness 407 of display 124.

Hence, when user 201 is not wearing glasses 205 and/or when user 201 removes glasses 205, device 101 can automatically detect that user 201 is not wearing glasses and automatically control display 124 to exit the glasses mode.

It is yet further appreciated that, in some implementations, device 101 can be configured to operate in one or the other of the manual mode of Figs. 4 and 5 and the automatic mode of Figs. 6 and 7. It is further appreciated that, in other implementations, device 101 can be configured to operate in one or more of the manual mode and the automatic mode.

Attention is next directed to Figs. 8 to 11, which depict an optional learning mode of device 101. Indeed, in these implementations, processor 120 is further configured to enter a glasses learning mode and, in the glasses learning mode: receive first input indicative of the first brightness level; receive second input indicative of the second brightness level; and store the first input and the second input at memory 122. Specifically, the first input and the second input can be respectively stored as first brightness level data 160 and second brightness level data 161.

Alternatively, processor 120 is further configured to enter the glasses learning mode and, in the glasses learning mode: receive first input indicative of the first brightness level; receive first additional input indicative of the first font size; receive second input indicative of the second brightness level; receive second additional input indicative of the second font size; and store the first input, the first additional input, the second input and the second additional input at memory 122. Specifically, the first input and the second input can be respectively stored as first brightness level data 160 and second brightness level data 161; and the first additional input and the second additional input can be stored as font size data at memory 122, respectively in association with first brightness level data 160 and second brightness level data 161.

Attention is first directed to Fig. 8 which depicts a GUI 800 rendered at display 124 of the optional glasses learning mode. For example, user 201 can manually select a GUI 800 for entering the glasses learning mode, for example from a pulldown menu (not depicted). GUI 800 comprises text which indicates that display 124 is presently in the glasses learning mode ("Glasses Learning Mode") and further text indicating which of first brightness level data 160 and second brightness level data 161 is to be received, and for which ambient light level ("Dim-Glasses On").

In other words, in Fig. 8, first brightness level data 160-1 is to be received such that display 124 can be controlled to a brightness level indicated in first brightness level data 160-1 when display 124 enters the glasses mode and it is determined that ambient light is below threshold ambient light level 163-1. GUI 800 hence comprises a slider input 803, which can be used to control brightness 407 of display 124 to a lighting level comfortable for user 201 when display 124 is viewed in a dim ambient lighting environment while wearing glasses: display brightness 407 increases when slider input 803 is moved in one direction and decreases when slider input 803 is moved in an opposite direction.

In depicted implementations, GUI 800 further comprises a second slider input 805, which can be used to control font size of "Sample Text" at display 124 to a font size comfortable and/or legible for user 201 when display 124 is viewed in a dim ambient lighting environment in combination with brightness 407 selected via slider 803, while wearing glasses: "Sample Text" increases in size when slider input 805 is moved in one direction and decreases in size when slider input 805 is moved in an opposite direction.

Indeed, a user 201 can adjust each of slider inputs 803, 805, with his/her glasses on, until "Sample Text" is comfortable and/or legible to read.

However, slider inputs 803, 805 are not to be considered unduly limiting and any input device, virtual and/or physical, can be used to adjust brightness and/or font size.

GUI 800 further comprises virtual buttons 807, 809, or the like, for respectively advancing to a next GUI in the glasses learning mode and exiting the glasses learning mode. Regardless of which virtual button 807, 809 is selected, first brightness level data 160-1, and optionally first font size data associated with dim ambient lighting levels, is stored at memory 122 respectively based on a position of slider input 803 and optionally a position of slider input 805. If first brightness level data 160-1 is already stored in memory 122, it is replaced with data indicative of a position of slider input 803. Similarly, if first font size data associated with dim ambient lighting levels is already stored in memory 122, it is replaced with data indicative of a position of slider input 805.

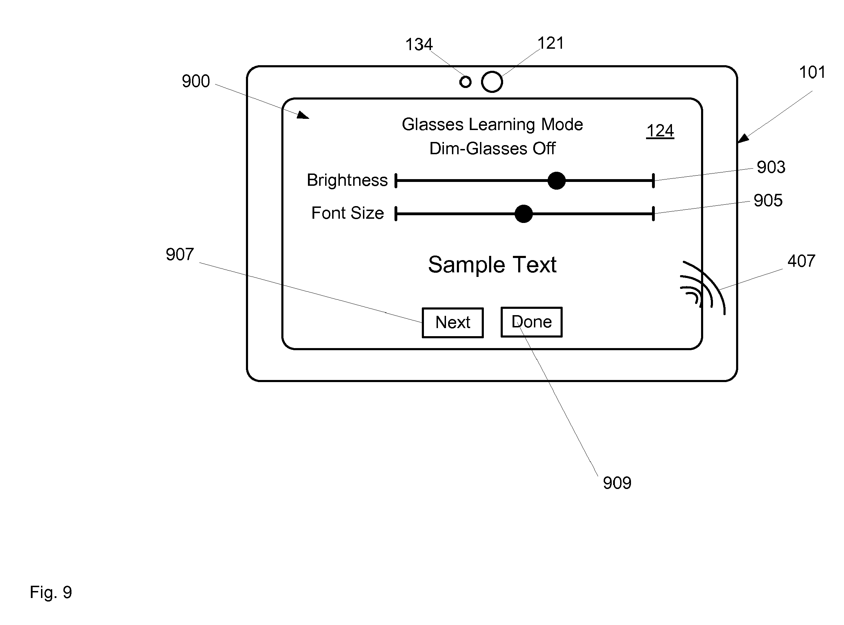

When virtual button 809 is selected, device 101 exits the glasses learning mode. When virtual button 807 is selected, GUI 900 can be provided, as depicted in Fig.9, GUI 900 being substantially similar to GUI 800, with like elements having like numbers, but preceded by "9" rather than "8". Like GUI 800, GUI 900 comprises text which indicates that display 124 is presently in the glasses learning mode ("Glasses Learning Mode") and further text indicating which of first brightness level data 160 and second brightness level data 161 is to be received, and for which ambient light level ("Dim-Glasses Off").

In other words, in Fig. 9, second brightness level data 161-1 is to be received such that display 124 can be controlled to a brightness level indicated in second brightness level data 161-1 when display 124 exits the glasses mode and it is determined that ambient light is below threshold ambient light level 163-1.GUI 900 hence comprises a slider input 903, which can be used to control brightness 407 of display 124 to a lighting level comfortable for user 201 when display 124 is viewed in a dim ambient lighting environment without wearing glasses: display brightness 407 increases when slider input 903 is moved in one direction and decreases when slider input 903 is moved in an opposite direction.

In depicted implementations, GUI 900 further comprises a second slider input 905, which can be used to control font size of "Sample Text" at display 124 to a font size comfortable and/or legible for user 201 when display 124 is viewed in a dim ambient lighting environment in combination with brightness 407 selected via slider 903, without wearing glasses: "Sample Text" increases in size when slider input 905 is moved in one direction and decreases in size when slider input 905 is moved in an opposite direction.

Indeed, a user 201 can adjust each of slider inputs 903, 905, with his/her glasses off, until "Sample Text" is comfortable and/or legible to read.

However, slider inputs 903, 905 are not to be considered unduly limiting and any input device, virtual and/or physical, can be used to adjust brightness and/or font size.

GUI 900 further comprises virtual buttons 907, 909 for respectively advancing to a next GUI in the glasses learning mode and exiting the glasses learning mode. Regardless of which virtual button 907, 909 is selected, second brightness level data 161-1, and optionally second font size data associated with dim ambient lighting levels, is stored at memory 122 respectively based on a position of slider input 903 and optionally a position of slider input 905. If second brightness level data 161-1 is already stored in memory 122, it is replaced with data indicative of a position of slider input 903. Similarly, if second font size data associated with dim ambient lighting levels is already stored in memory 122, it is replaced with data indicative of a position of slider input 905.

In any event, it is apparent from comparing Figs. 8 and 9 that both brightness 407 and font size of "Sample Text" is increased in Fig. 9 as compared to Fig. 8.

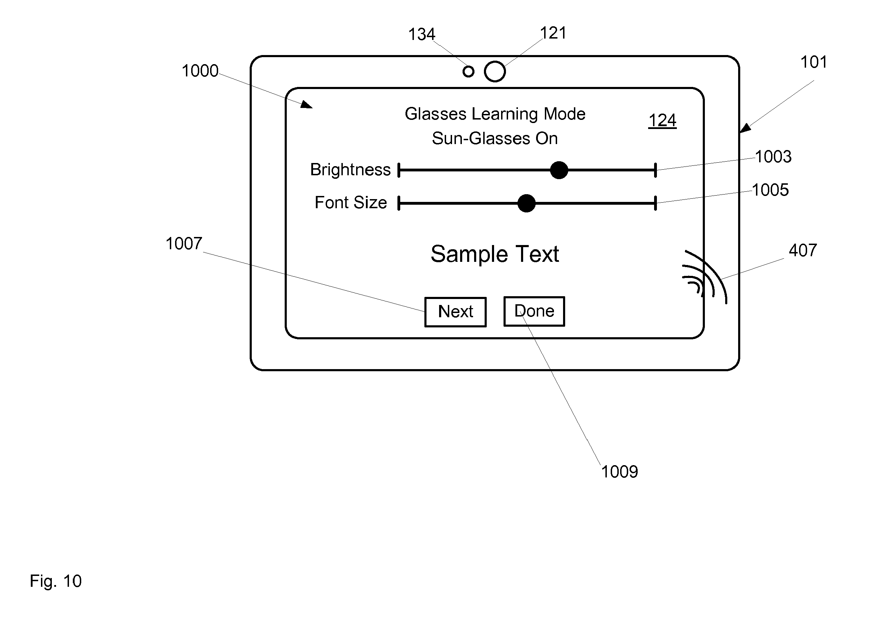

When virtual button 909 is selected, device 101 exits the glasses learning mode. When virtual button 907 is selected, GUI 1000 can be provided, as depicted in Fig.10, GUI 1000 being substantially similar to GUI 900, with like elements having like numbers, but preceded by "10" rather than "9". Like GUI 900, GUI 1000 comprises text which indicates that display 124 is presently in the glasses learning mode ("Glasses Learning Mode") and further text indicating which of first brightness level data 160 and second brightness level data 161 is to be received, and for which ambient light level ("Sun-Glasses Off").

Hence, as in Figs. 8 and 9, slider inputs 1003, 1005, or the like, can be used to respectively adjust brightness 407 and a font size of "Sample Text" until "Sample Text" is comfortable and/or legible to read with glasses on. Virtual buttons 1007, 1009 can be respectfully used to advance to a next GUI in the glasses learning mode or exit the glasses learning mode, again causing brightness data and font size data to be saved at memory 122.

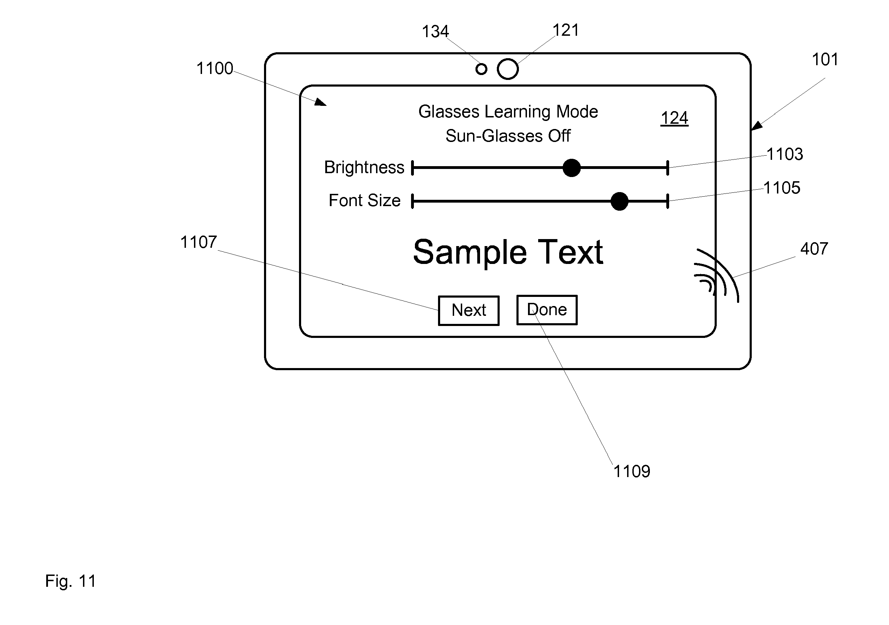

When virtual button 1007 is selected, GUI 1100 can be provided, as depicted in Fig.11, GUI 1100 being substantially similar to GUI 1000, with like elements having like numbers, but preceded by "11" rather than "10". Like GUI 1000, GUI 1100 comprises text which indicates that display 124 is presently in the glasses learning mode ("Glasses Learning Mode") and further text indicating which of first brightness level data 160 and second brightness level data 161 is to be received, and for which ambient light level ("Sun-Glasses On").

Hence, as in Figs. 8, 9, and 10 slider inputs 1103, 1105, or the like, can be used to respectively adjust brightness 407 and a font size of "Sample Text" until "Sample Text" is comfortable and/or legible to read with glasses off. Virtual buttons 1107, 1109 can be respectfully used to advance to a next GUI in the glasses learning mode or exit the glasses learning mode, again causing brightness data and font size data to be saved at memory 122.

It is also apparent from comparing Figs. 10 and 11 that font size of "Sample Text" is increased in Fig. 11 as compared to Fig. 10, but that brightness 407 of display 124 is the same.

It is yet further appreciated that further GUIs can be provided for receiving input data indicative of first brightness level data 160-2 and second brightness level data 161-2, respectively for glasses on and off, for the "Office" ambient lighting levels.

It is yet further appreciated that each of GUIs 800, 900, 1000, 1100 could include a prompt for a user to put on or remove glasses. In some of these implementations, an electronic image of a user can be captured using camera device 121 and slider inputs and/or input devices associated with each of GUIs 800, 900, 1000, 1100 can be locked until processor 120 determines that the user is wearing glasses, for GUIs 800, 1000, or not wearing glasses, for GUIs 900, 1100. In other words, in these implementations, processor 120 is further configured to: receive first input indicative of the first brightness level only when an electronic image of the user is captured using camera device 121 and it is determined from the electronic image that the user is wearing glasses; optionally receive first additional input indicative of the first font size only when an electronic image of the user is captured using camera device 121 and it is determined from the electronic image that the user is wearing glasses; receive second input indicative of the second brightness level only when an electronic image of the user is captured using camera device 121 and it is determined from the electronic image that the user is not wearing glasses; and optionally receive second additional input indicative of the second font size only when an electronic image of the user is captured using camera device 121 and it is determined from the electronic image that the user is not wearing glasses. Indeed, if the conditions for wearing glasses or not wearing glasses are not met, then the respective slider inputs are locked. If the conditions for wearing glasses or not wearing glasses are met, then the first input, optionally the first additional input, the second input and the optionally second additional input are stored at memory 122.

It is yet further appreciated that processor 120 can be further configured to determine an ambient lighting level at each of GUIs 800, 900, 1000, 1100 and lock the slider inputs and/or input devices associated with each of GUIs 800, 900, 1000, 1100 unless a respective ambient lighting level condition is met for each of GUIs 800, 900, 1000, 1100. For example, slider inputs 803, 805, 903, 905, or the like, can be locked for each of GUIs 800, 900 unless ambient lighting level is below threshold ambient lighting level 163-1; and slider inputs 1003, 1005, 1103,1105, or the like, can be locked for each of GUIs 1000, 1100 unless ambient lighting level is above threshold ambient lighting level 163-3. Furthermore, warnings and/or indications of ambient lighting level can be provided in each GUI 800, 900, 1000, 1100 along with indications to reduce or increase ambient lighting level to meet a respective ambient lighting level threshold.

In any event, by providing a glasses mode at a device in which display brightness is controlled based on whether a user is wearing glasses or not, power consumption at the device can be reduced, thereby prolonging battery life of the device. Entering and exiting the glasses mode, either manually or automatically, can further reduce eye fatigue in a user as the contrast of the display of the device is adjusted to a contrast appropriate to whether the user is wearing glasses or not, and alternatively to a contrast appropriate to ambient lighting conditions.

Those skilled in the art will appreciate that in some implementations, the functionality of device 101 can be implemented using pre-programmed hardware or firmware elements (e.g., application specific integrated circuits (ASICs), electrically erasable programmable read-only memories (EEPROMs), etc.), or other related components. In other implementations, the functionality of device 101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device (101) comprising:
a processor (120), a memory (122), and a display (124), the processor (120) configured to:
operate the display (124) in a glasses mode by controlling the display (124) to a first brightness level when the display (124) is in the glasses mode; and,
operate the display (124) to exit the glasses mode by controlling the display (124) to a second brightness level when the display (124) exits the glasses mode.

2. The device (101) of claim 1, wherein the first brightness level is less than the second brightness level.

3. The device (101) of claim 1 or 2, further comprising a camera device (121) configured to capture an electronic image of a user of the device (101), wherein the processor (120) is further configured to one or more of:
automatically operate the display (124) in the glasses mode in response to: analyzing the electronic image; and, determining that the electronic image comprises an image of the user wearing glasses; and
automatically operate the display (124) to exit the glasses mode in response to: analyzing the electronic image; and, determining that the electronic image comprises an image of the user without glasses.

4. The device (101) of any previous claim, further comprising an input device, wherein the processor (120) is further configured to one or more of:
operate the display (124) in the glasses mode when first input data is received at the input device indicating that the display (124) is to be operated in the glasses mode; and
operate the display (124) to exit the glasses mode when second input data is received at the input device indicating that the display (124) is to exit the glasses mode.

5. The device (101) of any previous claim, wherein the processor (120) is further configured to:
operate the display (124) in the glasses mode by controlling the display (124) to the first brightness level and controlling a font size of text at the display (124) to a first font size, when the display (124) is in the glasses mode; and,
operate the display (124) to exit the glasses mode by controlling the display (124) to the second brightness level and controlling the font size of the text at the display (124) to a second font size, when the display (124) exits the glasses mode.

6. The device (101) of claim 5, wherein the second font size is greater than the first font size, and the first brightness level is less than or equal to the second brightness level.

7. The device (101) of any previous claim, wherein the processor (120) is further configured to enter a glasses learning mode and, in the glasses learning mode: receive first input indicative of the first brightness level; receive second input indicative of the second brightness level; and store the first input and the second input at the memory (122).

8. The device (101) of any previous claim, further comprising a sensor (134) for detecting an ambient brightness level, and wherein the first brightness level and the second brightness level are dependent on the ambient brightness level.

9. A method comprising:
operating, using a processor (120) of a device (101), a display (124) of the device (101) in a glasses mode by controlling the display (124) to a first brightness level when the display (124) is in the glasses mode; and,
operating, using a processor (120), the display (124) to exit the glasses mode by controlling the display (124) to a second brightness level when the display (124) exits the glasses mode.

10. The method of claim 9, wherein the first brightness level is less than the second brightness level.

11. The method of claim 9 or 10, further comprising:
automatically operating the display (124) in the glasses mode in response to: analyzing an electronic image captured by a camera device (121) of the device (101); and, determining that the electronic image comprises an image of a user of the device (101) wearing glasses; and
automatically operating the display (124) to exit the glasses mode in response to: analyzing the electronic image; and, determining that the electronic image comprises an image of the user without glasses.

12. The method of any of claims 9 to 11, further comprising:
operating the display (124) in the glasses mode when first input data is received at an input device of the device (101) indicating that the display (124) is to be operated in the glasses mode; and
operate the display (124) to exit the glasses mode when second input data is received at the input device indicating that the display (124) is to exit the glasses mode.

13. The method of any of claims 9 to 12, further comprising:
operating the display (124) in the glasses mode by controlling the display (124) to the first brightness level and controlling a font size of text at the display (124) to a first font size, when the display (124) is in the glasses mode; and,
operating the display (124) to exit the glasses mode by controlling the display (124) to the second brightness level and controlling the font size of the text at the display (124) to a second font size, when the display (124) exits the glasses mode.

14. The method of any of claims 9 to 13, further comprising the device (101) entering a glasses learning mode and, in the glasses learning mode: receiving first input indicative of the first brightness level; receiving second input indicative of the second brightness level; and storing the first input and the second input at the memory (122).

15. A computer program product, comprising a computer usable medium having a computer readable program code adapted to be executed to implement a method comprising:
operating, using a processor (120) of a device (101), a display (124) of the device (101) in a glasses mode by controlling the display (124) to a first brightness level when the display (124) is in the glasses mode; and, operating, using a processor (120), the display (124) to exit the glasses mode by controlling the display (124) to a second brightness level when the display (124) exits the glasses mode.
